# EUROPÄISCHE PATENTSCHRIFT

(11) **EP 3 410 851 B1**
(45) Veröffentlichungstag und Bekanntmachung des Hinweises auf die Patenterteilung: **22.07.2020**
(21) Anmeldenummer: 17701054.3
(22) Anmeldetag: 11.01.2017
(51) Int. Cl.: A01N 25/12, A01N 25/30

(54) **PULVERFÖRMIGE FORMULIERUNGEN VON GRENZFLACHENAKTIVEN SUBSTANZEN AUF FESTEN, WASSERLÖSLICHEN TRAGERN, VERFAHREN ZU DEREN HERSTELLUNG SOWIE DEREN VERWENDUNG**
POWDER FORMULATIONS OF SURFACE ACTIVE AGENTS ON SOLID, WATER-SOLUBLE CARRIERS, METHOD FOR THEIR PREPARATION AND THEIR USE
FORMULES EN POUDRE DE SUBSTANCES ACTIVES EN SURFACES SUR SUPPORTS FIXES SOLUBLES DANS L'EAU, LEURS PROCEDES DE FABRICATION ET D'UTILISATION

(30) Priorität: 02.02.2016 EP 16153788
(43) Veröffentlichungstag der Anmeldung: 12.12.2018
(73) Patentinhaber: Evonik Operations GmbH, 45128 Essen (DE)
(72) Erfinder: KLOSTERMANN, Michael, 45141 Essen (DE); SIEVERDING, Ewald, 55578 St. Johann (DE); HÄNSEL, René, 46282 Dorsten (DE); VENZMER, Joachim, 45239 Essen (DE)
(74) Vertreter: Evonik Patent Association
(86) Internationale Anmeldenummer: PCT/EP2017/050447
(87) Internationale Veröffentlichungsnummer: WO 2017/133868

(56) Entgegenhaltungen:
- EP-A1- 2 387 992
- EP-A1- 2 387 992
- WO-A1-2005/104846
- WO-A1-2005/104846
- WO-A1-2015/193048
- WO-A1-2015/193048
- DATABASE WPI Week 201132 Thomson Scientific, London, GB; AN 2011-D35550 XP002768487, & CN 101 966 171 A (HANGZHOU HUADONG PHARM GROUP KANGRUN) 9. Februar 2011 (2011-02-09)
- DATABASE WPI Week 201136 Thomson Scientific, London, GB; AN 2011-C54116 XP002768488, & CN 101 940 564 A (HANGZHOU HUADONG PHARM GROUP KANGRUN) 12. Januar 2011 (2011-01-12)
- DATABASE WPI Week 201616 Thomson Scientific, London, GB; AN 2015-56900K XP002768489, & CN 104 798 772 A (INST AGRIC ENVIRONMENT & SUSTAINABLE DEV) 29. Juli 2015 (2015-07-29)
- DATABASE WPI Week 201456 Thomson Scientific, London, GB; AN 2014-Q36431 XP002768490, & CN 103 860 476 A (GUANGZHOU XINJI PHARM TECHNOLOGY CO LTD) 18. Juni 2014 (2014-06-18)
- DATABASE WPI Week 201132 Thomson Scientific, London, GB; AN 2011-D35550 & CN 101 966 171 A (HANGZHOU HUADONG PHARM GROUP KANGRUN) 9 February 2011 (2011-02-09)
- DATABASE WPI Week 201136 Thomson Scientific, London, GB; AN 2011-C54116 & CN 101 940 564 A (HANGZHOU HUADONG PHARM GROUP KANGRUN) 12 January 2011 (2011-01-12)
- DATABASE WPI Week 201616 Thomson Scientific, London, GB; AN 2015-56900K & CN 104 798 772 A (INST AGRIC ENVIRONMENT & SUSTAINABLE DEV) 29 July 2015 (2015-07-29)
- DATABASE WPI Week 201456 Thomson Scientific, London, GB; AN 2014-Q36431 & CN 103 860 476 A (GUANGZHOU XINJI PHARM TECHNOLOGY CO LTD) 18 June 2014 (2014-06-18)

## Beschreibung

Gegenstand der Erfindung sind feste, pulverförmige Zusammensetzungen enthaltend mindestens einen festen, wasserlöslichen Träger sowie mindestens eine grenzflächenaktive Substanz, Verfahren zu deren Herstellung und Verwendung in wässriger Lösung.

Beim Pflanzenschutz, bei der Schädlingsbekämpfung und im industriellen Bereich werden häufig Pflanzenschutzmittel (im Folgenden auch Pestizide genannt) angewendet. Diese können sein, zum Beispiel Herbizide, Fungizide, Insektizide, Wachstumsregulatoren, Molluskizide, Bakterizide, Virizide, Mikronährstoffe sowie biologische Pflanzenschutzmittel auf Basis von Naturstoffen oder lebenden oder ver- bzw. bearbeiteten Mikroorganismen. Pestizide Wirkstoffe sind im Zusammenhang mit Ihren Einsatzgebieten z.B. im 'The Pesticide Manual', Sixteenth Edition, 2012, Editor C. MacBean, aufgelistet; biologische Wirkstoffe sind z.B. im 'The Manual of Biocontrol Agents', 2001, The British Crop Protection Council angegeben. Pestizid wird im Weiteren immer als Sammelbegriff verwendet.

In der Praxis werden Pflanzenschutzmittel oft einem Tank mit Wasser als Inhalt zugegeben und unter gelindem Rühren in der sogenannten Spritzbrühe verteilt, um die konzentrierte Formulierung des Wirkstoffes vor dem Aussprühen zu verdünnen und den Pflanzen verträglich zu machen. Üblicherweise wird der Wirkstoff hierbei in der Spritzbrühe soweit verdünnt, dass beim Versprühen eine finale Einsatzkonzentration zwischen 2 und 4000 g/h erreicht wird.

Ein wichtiges Kriterium für Pflanzenschutzformulierungen ist hierbei, dass sie für den Anwender in praktikable Zubereitungsformen gebracht werden müssen, wobei sichergestellt werden muss, dass der Pestizidwirkstoff in der gewählten Zubereitungsform seine eigentliche Aufgabe, z.B. eine herbicide, insecticide oder fungicide Wirkung, optimal entfalten kann. Die Art der Formulierung spielt dabei eine große Rolle, sie sorgt dafür, dass der Farmer eine einfach zu handhabende und sichere, sowie effektive Darreichungsform des Wirkstoffs erhält, welches ihm ein einfaches Einarbeiten der Pflanzenschutzformulierung in die Spritzbrühe erlaubt.

Da sich Wirkstoffe zum Pflanzenschutz in ihren physikalisch-chemischen Eigenschaften oftmals deutlich unterschieden können, wurden verschiedene Formulierungskonzepte zur Bereitstellung von Pflanzenschutzformulierungen entwickelt. All diese Formulierungskonzepte unterliegen hierbei strikten Auflagen, was Umweltverhalten, Pflanzenverträglichkeit sowie Toxizität angeht. Ferner müssen Verkaufsprodukte nach der Cipac MT 46 eine ausreichende Lagerstabilität aufweisen.

Ist der Wirkstoff vollständig im Wasser löslich und chemisch stabil, ist das wasserlösliche Konzentrat die einfachste Form (Abkürzung SL). Bei Produkten, die nicht in Wasser aber in geeigneten Lösungsmitteln löslich sind, kommen sogenannte Emulsionskonzentrate (Abkürzung EC) zum Tragen. Hier erhält der Landwirt ein Produkt, indem alle Formulierungsbestandteile eine homogene Lösung bilden. Erst bei Verdünnung mit Wasser bildet sich eine Emulsion, die dann wie alle Formulierungen mit 100 - 1000 l Wasser pro Hektar aufgebracht werden. Bei diesem Formulierungskonzept sind die Löslichkeit und die chemische Stabilität der Wirkstoffe im Lösungsmittel von wesentlicher Bedeutung. Durch das Lösungsmittel werden nicht zuletzt wichtige Eigenschaften wie Adhäsion und Retention der Spritzbrühe auf der Pflanze und die Penetration in der Pflanze beeinflusst, wodurch auch die biologische Wirkung mitbestimmt wird.

Viele Wirkstoffe können jedoch nicht als EC oder SL formuliert werden. Entweder, weil bei diesen Wirkstoffen keine geeigneten Lösungsmittel gefunden werden, oder aber für die Aufnahme und Verteilung des Wirkstoffs in der Pflanze alternative Formulierungskonzepte notwendig sind. Besonders bei Insecticiden kann es sinnvoll sein, den Wirkstoff als Partikel zu erhalten, um durch die kristalline Form eine hohe Kontakt- und Fraßwirkung zu erzielen. Man spricht dann von sogenannten Suspensionskonzentraten (Abkürzung SC) wenn der Wirkstoff feinst verteilt als Feststoff in Wasser vorliegt. Ist der Träger ein Öl, spricht der Fachmann von Öldispersionen (Abkürzung OD).

Des Weiteren ist es üblich unlösliche, feste Wirkstoffe in fester Form der Spritzbrühe beizusetzen. Früher erfolgte dies in Form sogenannter Spritzpulver (Abkürzung WP). Heutzutage ist dieser Prozess aufgrund von Staubbildung nicht mehr üblich. Heute werden deshalb Wasser dispergierbare Granulate (Abkürzung WGs, oder WDGs, z.B. Atlantis WG von Bayer) eingesetzt. WDGs ermöglichen es, dass die Wirkstoffe staubfrei eingesetzt werden. Die WDGs werden der Spritzbrühe zugesetzt und sind durch Additive wie Wetting agents leicht wasserdispergierbar. Neben dem Wirkstoff, der 5-80% der Formulierung ausmachen kann, enthalten WDGs meist noch weitere Additive, welche selbst keine Pflanzenschutzwirkung aufweisen, jedoch mindestens eine Eigenschaft der Pflanzenschutzformulierung verbessern, sowie zusätzlich Füllstoffe oder Rieselhilfsmittel. Beispiele für gängige, in Pflanzenschutzformulierungen verwendete Additive sind Netz- und Dispergiermittel, Entschäumer oder Anti-Drift-Additive. Eine Gemeinsamkeit der genannten Additive ist hierbei, dass es sich bei ihnen um grenzflächenaktive Substanzen handelt, sprich, dass sie ihre Wirkung an Grenzflächen entfalten. Diese Grenzflächen sind beispielsweise Fest-Flüssig-Grenzflächen im Falle von Netz- und Dispergiermitteln (z.B. die Grenzfläche zwischen Pflanzschutzformulierung und Pflanze) oder Flüssig-Luft-Grenzflächen im Falle von Entschäumern und Anti-Driftmitteln.

In WO 2005/104846 werden wasserlösliche feste, geträgerte Formulierungen offenbart, die Flonicamid, ein Dispergiermittel und ein Tensid enthalten. Das Trägermaterial ist ausgewählt aus monomeren Zuckern, Stärke und wasserlöslichen Salzen.

In EP 2 387 992 A1 werden wasserlösliche, pulverförmige Trägerzusammensetzungen offenbart, die eine Kombination aus einem Polymer, wie beispielsweise Polyethylenglycol, und einer grenzflächenaktiven Substanz enthalten.

In CN 101 966 171 A und CN 101 940 564 A werden Zusammensetzungen offenbart, die einen wasserlöslichen Träger und eine nicht-ionische, grenzflächenaktive Substanz als Emulgator enthalten.

In CN 104 798 772 A wird eine Pestizid-Zubereitung offenbart, die pulverförmig sein kann und einen wasserlöslichen Träger, wie beispielsweise Polyethylenglycol, sowie eine grenzflächenaktive Substanz enthält.

In CN 103 860 476 A wird ein wasserlösliches Pulver offenbart, das einen wasserlöslichen Träger, wie beispielsweise Polyethylenglycol, sowie eine grenzflächenaktive Substanz enthält.

Additive, welche die biologische Wirksamkeit von Pestiziden bzw. Pestizidmischungen verbessern, werden gemeinhin auch als Adujvantien (oder Adjuvants) bezeichnet. Die Wirksamkeit wird in diesem Zusammenhang häufig auch als Effektivität bezeichnet. Das Pesticides Safety Directorate (PSD, der ausführende Bereich der Health and Safety Executive, einer nicht-staatlichen, öffentlichen Vereinigung in Großbritannien) definiert ein Adjuvant als eine Substanz, die nicht selbst als Pestizid wirksam ist, aber die Effektivität eines Pestizides erhöht bzw. unterstützt. (http://www.pesticides.gov.uk/approvals). Dies kann durch Feldversuche nachgewiesen werden. Bei der Verwendung des Wortes Adjuvant werden oft in Patenten oder der Literatur als Synonym die Begriffe Tensid oder Netzmittel verwendet, die jedoch viel zu weitreichend sind und eher als Oberbegriff gedeutet werden können. Aufgrund der hier avisierten Verwendung wird auf den Begriff Adjuvant zurückgegriffen.

In der Praxis gibt es zahlreiche Pflanzenschutzwirkstoffe, die nur mit Hilfe von Adjuvants eine akzeptable Effektivität, also eine praxisrelevante Wirkung erreichen. Die Adjuvantien helfen hier die Schwächen des Wirkstoffes auszugleichen, wie zum Beispiel die UV-Empfindlichkeit von Avermectinen (werden durch ultraviolette Strahlung zerstört) oder die Wasserinstabilität von Sulfonylharnstoffen. Neuere Wirkstoffe sind in der Regel nicht wasserlöslich und, um sich daher effektiv auf einem target = Zielorganismus = Pflanzen verbreiten zu können, sind Adjuvantien für die wässrige Sprühbrühe unerlässlich, um auf dem Wege der physikalischen Beeinflussung der wässrigen Lösungen die schlechte Benetzung von Oberflächen auszugleichen. Zudem helfen Adjuvantien technische Anwendungsprobleme, wie geringe Wasseraufwandmengen, unterschiedliche Wasserqualitäten und den Trend erhöhter Auftragsgeschwindigkeiten, zu überwinden. Die Erhöhung der Pestizidwirksamkeit sowie der Ausgleich von Schwächen der Pflanzenschutzmittel durch Adjuvantien wird allgemein als Effektivitätssteigerung der Pflanzenschutzmittelanwendung bezeichnet.

Als Adjuvantien werden häufig synthetische Tenside wie z.B. ethoxylierte Alkohole oder Alkylpolyglykoside eingesetzt. Als weitere wichtige Adjuvant-Gruppe werden häufig Organosilikone, insbesondere Trisiloxane-Tenside der allgemeinen Struktur Me₃SiO-SiMeR-OSiMe₃, wobei der Rest R ein Polyetherradikal darstellt, eingesetzt. Diese senken signifikant die Oberflächenspannung von Wasser und verbessern dadurch das Anhaften der Spritzbrühe auf dem Blatt (Adhesion, Retention) und die Aufnahme der Wirkstoffe durch die Stomata und auch durch die Cuticula (siehe z.B. Field&Bishop in Pesticide Science, 1988, Vol.24, pp.55-62; Stevens et al. In Pesticide Science, 1991, Vol.33, pp. 371-82). Die oberflächenspannungs-erniedrigende Wirkung von Trisiloxanen auf Wasser ist hierbei deutlich stärker ausgeprägt als bei in der Vergangenheit verwendeten organischen Tensiden wie zum Beispiel Nonylphenolethoxylate. Darüber hinaus ist dem Fachmann bekannt, dass besonders Trisiloxan-Tenside mit nicht mehr als 10 Ethylenoxid-Einheiten einen superspreitenden Effekt auf Spritzbrühen haben, dies verbessert deutlich die Effektivität von Pflanzenschutzmitteln. Unter Superspreitung wird die Fähigkeit verstanden, einen Tropfen ca. 9 mal größer als einen Tropfen destilliertes Wasser auf einer hydrophoben Oberfläche (z.B. Blatt von Pflanzen) spreiten zu lassen.

Im Gegensatz zu Adjuvantien ist die Aufgabe von Entschäumern die unerwünschte Bildung von Schaum, z.B. während des Tankmix-Vorgangs beim Ansetzen von Spritzbrühen, zu verhindern (siehe z.B. US 5504054 A). Gängige im Agrarbereich verwendete Entschäumer basieren hierbei oftmals auf Polyether-modifizierten Polydimethylsiloxanen. Darüber hinaus finden auch silikonfreie Entschäumer, welche als Entschäumerwirkstoff beispielsweise Pflanzenöle enthalten, Verwendung in Agraranwendungen.

Anti-Drift-Additive wiederum haben die Eigenschaft, dass sie beim Versprühen der Pflanzenschutzformulierung über der zu bestellenden Agrarfläche die Tröpfchengrößenverteilung des erzeugten Sprays dahingehend beeinflussen, dass Tröpfchengrößen kleiner 150 µm weitestgehend vermieden werden. Grund hierfür ist, dass solch kleine Tröpfchen besonders drift-anfällig sind, d.h. durch leichte Luftströmungen vom eigentlichen Applikationsort wegtransportiert werden und somit verstärkt zu sogenannten "Off-Target"-Deposition neigen. Dies wiederum führt zu hohen Umweltbelastungen für die Umgebung sowie zu ökonomischen Verlusten

Die Aufgaben von Additiven in Pflanzenschutzformulierungen sind nicht immer klar getrennt. So ist es durchaus möglich, dass ein Additiv mehrere Aufgaben übernehmen kann. Die WO2015193048 z.B. beschreibt die gleichzeitige Verwendung von Entschäumern als Anti-Drift-Mittel. In EP 14188067 wird die Verwendung von hydrophoben Polyglycerin-Estern als Adjuvant und Anti-Drift-Mittel beschrieben.

Für gewöhnlich werden WDGs durch Sprühtrocknung einer wässrigen Slurry, welche alle wesentlichen Bestandteile der WDGs erhält, hergestellt. (Fluid bed granulation of a slurry, continuous process). Bei der Beimengung von Additiven zu einer solchen Slurry kann es jedoch oftmals zu Prozess-technischen Nachteilen kommen. So gestaltet sich die Einarbeitung vieler wasserlöslicher Tenside aufgrund starker Schaumbildung oftmals als schwierig. Dies ist insbesondere bei der Verwendung von Trisiloxanen der Fall. Darüber hinaus ist es möglich, dass wasserlösliche Tenside nach dem Trocknen der Slurry nahezu irreversibel auf im WDG enthaltene Feststoffe (z.B. Füllstoffe oder Rieselhilfsmittel) absorbieren können, wodurch ihre Wirksamkeit während der späteren Anwendung fast völlig zum Erliegen kommt. Dieses Phänomen wird meist auch dann beobachtet, wenn das Tensid nachträglich auf die fertige WDG-Formulierung gegeben wird (z.B. durch Aufsprühen).

Bei der Einarbeitung von Entschäumern in WDG-Formulierungen kann hingegen das Problem auftreten, dass diese in den gewählten Konzentrationen unverträglich bzw. nur teilweise verträglich mit den wässrigen Slurry sind und es so während der Herstellung zu einer ungleichmäßigen Verteilung des Entschäumer-Wirkstoffs im WDG kommt. Darüber hinaus kann auch bei Entschäumern das Problem auftreten, dass diese nach dem Trocknen auf feste Bestandteile der WDGs aufziehen, wodurch es ebenfalls zu einem Wirksamkeitsverlust kommt.

Prinzipiell ließen sich diese Probleme durch feste, pulverförmige Additive umgehen, welche den WDGs im trockenen Zustand beigemengt werden. In der Vergangenheit wurden daher eine Reihe an Produkten entwickelt, in welchen Additive für Pflanzenschutzformulierungen auf feste, wasserunlösliche Träger (oftmals Silica-Träger) aufgebracht wurden. Ein Beispiel hierfür ist das Produkt Break-Thru® S 250 DS, welches aus einem Trisiloxan aufgezogen auf einen Silica-Träger besteht. Ein Nachteil dieser Produktklasse ist jedoch, dass der Träger das Additiv nur teilweise freigibt, was ebenfalls zu einer Verminderung von dessen Wirkung führt. Darüber hinaus besteht die Befürchtung, dass der in der Spritzbrühe nicht lösliche Träger während der Anwendung zu einer Verstopfung der Spritzdüsen führt. Ferner kann der Silica-Träger an den Wandungen des Tanks, in welchem sich die Spritzbrühe befindet adsorbieren, was zu Verunreinigungen führt.

Additive für Pflanzenschutzformulierungen, die vollständig auf oder in einen wasserlöslichen Träger auf- oder eingebracht werden, sind im Stand der Technik nicht offenbart.

Aufgabe der vorliegenden Erfindung war daher die Bereitstellung von neuartigen festen Additiven für Pflanzenschutzformulierungen, welche mindestens einen im Stand der Technik aufgeführten Nachteil überwinden.

### Beschreibung der Erfindung

Überraschenderweise wurde gefunden, dass diese Aufgabe durch Zusammensetzungen aus Additiven, welche in einen festen, wasserlöslichen Träger eingebettet sind, gelöst werden kann.

Gegenstand der vorliegenden Erfindung sind daher feste, pulverförmige Zusammensetzungen enthaltend mindestens einen festen, wasserlöslichen Träger sowie mindestens eine grenzflächenaktive Substanz, dadurch gekennzeichnet, dass die grenzflächenaktive Substanz ein Polyethersiloxan ist, und dass der wasserlösliche Träger ein polymeres Material ist ausgewählt aus Homopolymeren, wobei die Homopolymere ausgewählt sind aus Polyethylenglycol.

Die erfindungsgemäßen Zusammensetzungen haben den Vorteil, dass sich während der Anwendung der wasserlösliche Träger vollständig in der wässrigen Lösung auflöst und das Additiv somit vollständig freigesetzt wird. Damit werden insbesondere Wirksamkeitsverluste vermieden.

Das vollständige Auflösen des wasserlöslichen Trägers in der wässrigen Lösung hat überdies den Vorteil, dass bei Spritzanwendungen keine Vorstopfung der Spritzdüsen erfolgen kann, wie dies bekannt ist z.B. im Falle der Verwendung von Kieselsäure als Trägersubstanz für Adjuvantien im Agrarbereich.

Ein weiterer Vorteil ist, dass nach dem Auflösen der erfindungsgemäßen Zusammensetzungen alle Geräte rückstandsfrei mit Wasser gereinigt werden können.

Ein weiterer Gegenstand ist ein Verfahren zur Herstellung der erfindungsgemäßen Zusammensetzungen.

Ein weiterer Gegenstand ist die Verwendung der erfindungsgemäßen Zusammensetzungen und der erfindungsgemäßen Verfahrensprodukte in wässriger Lösung.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Die Angabe eines Massenverhältnisses von z.B. Komponente (a) zu Komponente (b) von 0,1 bedeutet, dass eine Mischung enthaltend diese beiden Komponenten 10 Gew.-% der Komponente (a) bezogen auf die Massensumme der Komponenten (a) und (b) aufweist.

Im Umfang der Erfindung werden unter grenzflächenaktiven Substanzen diejenigen verstanden, die an der Grenzfläche Luft/Wasserphase Effekte wie Erniedrigung der Oberflächenspannung der Wasserphase oder Schauminhibition verursachen oder an der Grenzfläche Wasserphase/hydrophobe feste Oberfläche eine Verkleinerung des Grenzwinkels eines Tropfens der Wasserphase auf der hydrophoben festen Oberfläche bis hin zur Superspreitung des Tropfens bewirken.

Unter einem festen Träger wird im Umfang der vorliegenden Erfindung verstanden, dass diese Substanz sich zwischen +40 und -20 °C im festen Aggregatzustand befindet.

Unter einem wasserlöslichen Träger wird verstanden, dass diese Substanz zwischen +10 und +40 °C in Wasser zu mindestens 5 Gew.-% bezogen auf die Masse dieser Lösung vollständig löslich ist.

Unter einem festen, wasserlöslichen Träger wird verstanden, dass eine Substanz sich zwischen +40°C und -20°C im festen Aggregatzustand befindet und zwischen +10°C und +40°C in Wasser zu mindestens 5 Gew.-% bezogen auf die Masse dieser Lösung vollständig löslich ist.

Eine hydrophobe feste Oberfläche ist eine natürliche und/oder synthetische Oberfläche, die im Temperaturbereich zwischen +40°C und -20°C fest ist, und auf der ein Tropfen Wasser einen Randwinkel im Bereich von 91° bis 180°, bevorzugt im Bereich von 100° bis 170°, besonders bevorzugt im Bereich von 105° bis 150° ausbildet. Der Kontaktwinkel des Tropfens auf der Oberfläche lässt sich beispielsweise wie in der Standard-Vorschrift ASTM D 7334 - 08(2013) beschrieben bestimmen.

Im Falle von Superspreitern ist die Definition über den Randwinkel nicht mehr sinnvoll, da die Änderungen zu klein sind. Bevorzugt werden Lösungen eines Superspreiters dadurch gekennzeichnet, dass ein Tropfen mit einem Volumen von 50 µl einer 0,1%igen Lösung in Wasser auf einer hydrophoben Oberfläche mindestens einen Durchmesser von 6 cm aufweist. Bevorzugt ist die Oberfläche eine Polypropylenfolie.

Bevorzugte Homopolymere umfassen Polyvinylalkohol, Poly(meth)acrylsäure, Poly(meth)acrylamid, Polyvinylpyrrolidon, Polyhydroxyethyl-(Meth)acrylat, Polyamino-alkyl-(Meth)Acrylat, Polyvinylimidazol, Polyethylenimin oder Polyethylenglycol.

Copolymere Trägermaterialien sind vorzugsweise statistische Copolymere.

Statistisch bedeutet, dass die Verteilung der unterschiedlichen Monomerbausteine in der Polymerkette zufällig ist. Das Co-Polymer kann jedoch auch als Block-Copolymer, bei denen die Polymerkette längere Sequenzen der unterschiedlichen Monomerbausteine aufweist, oder als Graft-Polymer, bei welchem Blöcke eines Monomers auf das Gerüst eines anderen Monomers polymerisiert sind, vorliegen.

Die in den hier angeführten Formeln (I) bis (IV) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen. Dies gilt auch für als solche an sich exakt wiedergegebene Strukturformeln.

Erfindungsgemäß sind die Trägermaterialien Polyethylenglycol.

Bevorzugt weisen die polymeren Trägermaterialien ein Molgewicht im Bereich von 600 - 20000 g/mol, besonders bevorzugt von im Bereich von 1000 - 15000 g/mol, insbesondere bevorzugt im Bereich von 2000 - 10000 g/mol auf. Das Molgewicht der Polymere kann nach den Methoden des Standes der Technik bestimmt werden, bevorzugt wird das Molgewicht durch Gel-Permeations-Chromatographie bestimmt. Besonders bevorzugt erfolgt die Bestimmung der Molgewichte, insbesondere der gewichtsmittleren Molmassen Mw mittels gelpermeationschromatographischer Analysen (GPC) mit einem Gerät Typ 1100 der Firma Hewlett-Packard unter Verwendung einer SDV Säulenkombination (1000/10000 Å, je 65cm, Innendurchmesser 0,8 cm, Temperatur 30°C), THF als mobiler Phase mit einer Flussrate von 1ml/min und einem RI-Detektor (Hewlett-Packard). Als Standard wird ein Polyethylenglycol mit Molmassen im Bereich von 100 bis 45000 g/mol verwendet.

Besonders bevorzugt ist der feste, wasserlösliche Träger ein Polyethylenglycol mit einem Molgewicht von 2000 - 10000 g/mol, weiter mehr besonders bevorzugt ein Polyethylenglycol bisterminal hydroxysubstituiert mit einem Molgewicht von 2000 - 10000 g/mol.

Weiterhin haben bevorzugte polymere Trägermaterialen einen Schmelzpunkt im Bereich von 40 - 200 °C, besonders bevorzugt im Bereich von 45 - 150 °C insbesondere bevorzugt im Bereich von 50 - 100 °C.

Besonders bevorzugt werden im Rahmen der vorliegenden Erfindung polymere Trägermaterialien mit einem Molgewicht im Bereich von 2000 - 10000 g/mol und einem Schmelzpunkt im Bereich von 50 - 100 °C verwendet.

Bevorzugt wird in den erfindungsgemäßen Zusammensetzungen der wasserlösliche Träger mit 1 - 75 Gew.-%, besonders bevorzugt mit 3 - 50 Gew.-%, insbesondere bevorzugt mit 5 - 40 Gew.-% grenzflächenaktiver Substanzen beladen. Die Konzentrationsangaben beziehen sich hierbei auf die Gesamt-Zusammensetzung.

Bevorzugte erfindungsgemäße Zusammensetzungen enthalten als festen, wasserlöslichen Träger ein Polyethylenglycol mit einem Molgewicht von 2000 - 10000 g/mol und als grenzflächenaktive Substanz ein Polyethersiloxan, besonders bevorzugt ein polyethylenoxid-polypropylenoxid-modifiziertes Polyethersiloxan.

In einer bevorzugten Ausführungsform enthält die erfindungsgemäße Zusammensetzung neben dem festen, wasserlöslichen Träger als grenzflächenaktive Substanz ein Adjuvans. Vorteilhafterweise wird so die Effektivität einer Pflanzenschutzformulierung erhöht.

Mehr bevorzugte erfindungsgemäße Zusammensetzungen enthalten als festen, wasserlöslichen Träger ein Polyethylenglycol mit einem Molgewicht von 2000 - 10000 g/mol und als Adjuvans ein Polyethertrisiloxan, besonders bevorzugt ein polyetheylenoxid-polypropylenoxid-modifiziertes Polyethertrisiloxan.

In einer ebenfalls bevorzugten Ausführungsform enthält die erfindungsgemäße Zusammensetzung neben dem festen, wasserlöslichen Träger als grenzflächenaktive Substanz einen Entschäumer. Vorteilhafterweise wird so die Schaumbildung einer Pflanzenschutzformulierung Formulierung (z.B. beim Ansetzen der Pflanzenschutzformulierung) verringert bzw. unterdrückt.

Bevorzugt sind die grenzflächenaktiven Substanzen so ausgewählt, dass sie im festen, wasserlöslichen Träger fein dispergiert sind, bevorzugt klar löslich sind.

Die Dispersion ist oberhalb des Schmelzpunktes des Trägers separationsstabil und es tritt insbesondere keine Phasenseparation auf. Mehr bevorzugt sind die grenzflächenaktiven Substanzen im Träger löslich und bilden eine klare Lösung oberhalb des Schmelzpunktes des Trägers.

Die feine Dispergierbarkeit der grenzflächenaktiven Substanz im Träger ist vorteilhaft, da die hieraus angefertigten wässrigen Lösungen zu einer besonders feinen Verteilung des Additives im Wasser führen, ohne dass eine intensive Vermischung stattfinden muss.

Überraschenderweise wurde gefunden, dass insbesondere Trisiloxane sowie Polyethersiloxane eine hohe Verträglichkeit zu polymeren Trägermaterialien aufweisen, insbesondere zu Polyethylenglycol-basierten Trägermaterialien. Eine solche gute Verträglichkeit und die hieraus resultierenden Vorteile waren nicht naheliegend und bislang auch nicht im Stand der Technik offenbart.

### Adjuvant:

Weist die erfindungsgemäße Zusammensetzung als grenzflächenaktive Substanz ein Adjuvant auf, so ist dieses bevorzugt ausgewählt aus der Klasse der Trisiloxan-Tenside, insbesondere bevorzugt aus der Klasse der polyethermodifizierten Trisiloxan-Tensid. Ganz besonders bevorzugt sind hierbei polyethylenoxid-polypropylenoxid-modifizierte Trisiloxane.

Insbesondere bevorzugt sind Trisiloxan-Tenside der Formel (I)

MₐD_{b}D'_{c} Formel (I)

mit M = R¹₃SiO_{1/2}, D = R¹₂SiO_{2/2}, D' = R¹R²SiO_{2/2},
wobei
a gleich 2,
b zwischen 0 und 0,1, bevorzugt 0,
c zwischen 1,0 und 1,15, bevorzugt zwischen 1,0 und 1,10, insbesondere bevorzugt zwischen 1,00 und 1,05,
R¹ unabhängig voneinander Kohlenwasserstoff mit 1 bis 8 Kohlenstoffatomen, bevorzugt Methyl-, Ethyl-, Propyl-, oder Phenyl-Reste, insbesondere bevorzugt Methyl-Reste,
R² unabhängig voneinander ein Polyether-Rest der Formel (II)

   -R³O[CH₂CH₂O]ₘ[CH₂CH(CH₃)O]ₙR⁵ Formel (II)

   wobei
   - m: = 3,4 bis 11,0, bevorzugt 3,6 bis 9,9, mehr bevorzugt 4,5 bis 8,5,
   - n: = 2,5 bis 8,0 bevorzugt 2,7 bis 7,5, mehr bevorzugt 3,0 bis 6,0,
   jedoch mit den Maßgaben, dass gilt:
   m/n = 0,44 bis 3,08, bevorzugt 0,55 bis 3,00, mehr bevorzugt 0,8 bis 2,9, weiter mehr bevorzugt mehr als 1,2 bis zu 2,85, insbesondere bevorzugt 1,9 bis 2,8,
   R³ unabhängig voneinander divalente Kohlenwasserstoffreste mit 2 bis 8 Kohlenstoffatomen, bevorzugt Ethylen-, Propylen-, 1-Methylpropylen-, 1,1-Dimethylpropylen-Rest, insbesondere bevorzugt -CH₂CH₂CH₂-,
   R⁵ unabhängig voneinander Kohlenwasserstoffrest mit 1 bis 16 Kohlenwasserstoffen oder Wasserstoff, bevorzugt Wasserstoff oder Methyl, insbesondere Wasserstoff.

Bevorzugt besitzt der Polyetherrest berechnet ohne R³O und berechnet ohne R⁵ eine Molmasse M (PE) berechnet sich nach 44 g/mol ^{∗} m + 58 g/mol ^{∗} n, wobei sich die Indices m und n auf Formel (II) beziehen.

Die bevorzugten Werte für M (PE) sind: Untere Grenzen M (PE) größer als 520 g/mol, bevorzugt größer als 530 g/mol, mehr bevorzugt größer als 535 g/mol; obere Grenze M (PE) kleiner als 660 g/mol, bevorzugt kleiner als 630 g/mol mehr bevorzugt kleiner als 600 g/mol.

Bevorzugt ist der Wert für M (PE) größer als 520 g/mol und kleiner als 660 g/mol, insbesondere größer als 535 g/mol und kleiner als 600 g/mol.

Bevorzugt ist die Summe m + n größer 9 bis zu 19, mehr bevorzugt größer 9,5 bis zu 15 und insbesondere bevorzugt größer 10 bis zu 12.

Mehr bevorzugt ist R⁵ gleich Wasserstoff und der Wert für M (PE) größer als 520 g/mol und kleiner als 660 g/mol, insbesondere bevorzugt ist R⁵ gleich Wasserstoff und der Wert für M (PE) größer als 535 g/mol und kleiner als 600 g/mol.

Besonders bevorzugt weisen die erfindungsgemäßen Zusammensetzungen die Polyether modifizierten Siloxane der Formel (I) mit einem Index c zwischen 1 und 1,05 auf, wobei die Indices des Polyetherrestes nach Formel (II) sind m von 3,4 bis 11,0 und n von 2,5 bis 8,0.

Besonders bevorzugt weisen die erfindungsgemäßen Zusammensetzungen die Polyether modifizierten Siloxane der Formel (I) mit einem Index c zwischen 1 und 1,05 auf, wobei das Verhältnis m/n ist 0,8 bis 2,8, insbesondere 1,9 bis 2,8.

Insbesondere bevorzugt weisen die erfindungsgemäßen Zusammensetzungen die Polyether modifizierten Siloxane der Formel (I) mit einem Index c zwischen 1 und 1,05 auf, wobei die Molmasse des Polyetherrestes M(PE) ist größer als 520 g/mol und kleiner als 660 g/mol.

Insbesondere bevorzugt weisen die erfindungsgemäßen Zusammensetzungen die Polyether modifizierten Siloxane der Formel (I) mit einem Index b = 0 und c zwischen 1 und 1,05 auf, wobei der Rest R⁵ ist gleich Wasserstoff ist.

Insbesondere bevorzugt weisen die erfindungsgemäßen Zusammensetzungen die Polyether modifizierten Siloxane der Formel (I) mit einem Index c zwischen 1 und 1,05 auf, wobei der Rest R⁵ ist gleich Wasserstoff ist.

Insbesondere bevorzugt weisen die erfindungsgemäßen Zusammensetzungen die Polyether modifizierten Siloxane der Formel (I) mit einem Index b = 0 und c zwischen 1 und 1,05 auf, wobei die Molmasse des Polyetherrestes M(PE) ist größer als 520 g/mol und kleiner als 660 g/mol und der Rest R⁵ ist gleich Wasserstoff.

Bevorzugt weisen die erfindungsgemäßen Zusammensetzungen keine weiteren Polyether modifizierten Siloxane außer denen nach Formel (I) auf.

Mehr bevorzugte erfindungsgemäße Zusammensetzungen enthalten als festen, wasserlöslichen Träger ein Polyethylenglycol mit einem Molgewicht von 2000 - 10000 g/mol und als Adjuvans ein Trisiloxan-Tensid der Formel (I).

Weiter mehr bevorzugte erfindungsgemäße Zusammensetzungen enthalten als festen, wasserlöslichen Träger ein bishydroxyterminiertes Polyethylenglycol mit einem Molgewicht von 2000 - 10000 g/mol und als Adjuvans ein Trisiloxan der Formel (I) mit Index a = 0, b = 0 bis 0,1 und c zwischen 1 und 1,05 auf, wobei die Molmasse des Polyetherrestes M(PE) größer als 520 g/mol und kleiner als 660 g/mol und der Rest R⁵ ist gleich Wasserstoff ist.

Besonders bevorzugte erfindungsgemäße Zusammensetzungen enthalten als festen, wasserlöslichen Träger ein bishydroxyterminiertes Polyethylenglycol mit einem Molgewicht von 2000 - 10000 g/mol und als Adjuvans ein Trisiloxan der Formel (I) mit Index a = 0, b = 0 bis 0,1 und c zwischen 1 und 1,05 auf, R¹ gleich Methyl, R³ gleich -CH₂CH₂CH₂-, wobei die Molmasse des Polyetherrestes M(PE) größer als 520 g/mol und kleiner als 660 g/mol und der Rest R⁵ ist gleich Wasserstoff ist.

Weiter besonders bevorzugte erfindungsgemäße Zusammensetzungen enthalten als festen, wasserlöslichen Träger ein bishydroxyterminiertes Polyethylenglycol mit einem Molgewicht von 2000 - 10000 g/mol und als Adjuvans ein Trisiloxan der Formel (I) mit Index a = 0, b = 0 bis 0,1 und c zwischen 1 und 1,05 auf, R¹ gleich Methyl, R³ gleich -CH₂CH₂CH₂-, wobei die Molmasse des Polyetherrestes M(PE) größer als 520 g/mol und kleiner als 660 g/mol und der Rest R⁵ ist gleich Wasserstoff ist und der Index m gleich 4,5 bis 8,5 und n gleich 3,0 bis 6,0, wobei das Verhältnis m/n 1,9 bis 2,8 beträgt.

Insbesondere bevorzugte erfindungsgemäße Zusammensetzungen enthalten als festen, wasserlöslichen Träger ein bishydroxyterminiertes Polyethylenglycol mit einem Molgewicht von 2000 - 10000 g/mol wobei der Träger mit 5 - 40 Gew.-% grenzflächenaktiver Substanz beladen wird, bezogen auf die Gesamt-Zusammensetzung, mit einem Trisiloxan der Formel (I) mit Index a = 0, b = 0 bis 0,1 und c zwischen 1 und 1,05 auf, R¹ gleich Methyl, R³ gleich -CH₂CH₂CH₂-, wobei die Molmasse des Polyetherrestes M(PE) größer als 520 g/mol und kleiner als 660 g/mol ist und der Rest R⁵ gleich Wasserstoff ist und der Index m gleich 4,5 bis 8,5 und n gleich 3,0 bis 6,0 sind, wobei das Verhältnis m/n 1,9 bis 2,8 beträgt.

### Entschäumer:

Weist die erfindungsgemäße Zusammensetzung als grenzflächenaktive Substanz einen Entschäumer auf, so ist dieser bevorzugt ausgewählt aus der Gruppe der Polyethersiloxane. Insbesondere bevorzugt sind hierbei Polyethersiloxane, welche der allgemeinen Formel (IV) entsprechen:

M_{d} Dₑ T_{f} Q_{g} Formel (IV)

M = [R^{f}₃SiO_{1/2}]
D = [R^{f}₂SiO_{2/2}]
T = [R^{f}SiO_{3/2}]
Q = [SiO_{4/2}]
wobei
d = 2 - 22, bevorzugt, 2 - 14, insbesondere 2,
e = 3 - 500, bevorzugt, 10 - 300, insbesondere 30 - 250,
f = 0 - 16, bevorzugt, 0 - 8, insbesondere 0,
g = 0 - 10, bevorzugt, 0 - 6, insbesondere 0,
wobei der Rest R^{f} ein Rest R⁶, R⁷ oder R⁸ ist, mit der Maßgabe, dass mindestens ein Rest R^{f} ein Rest R⁷ ist, wobei
- R⁶: ein Alkylrest mit 1 bis 16, bevorzugt 1-4 Kohlenstoffatomen oder ein Arylrest ist,
- R⁷: ein Polyetherrest der Formel (V) ist

-(Y)ₕ[O(C₂H₄₋ᵢR⁹O)ⱼ(CₓH₂ₓO)ₖZ¹]_{w} Formel (V)

wobei
h = 0 oder 1, bevorzugt 1,
i = 1 bis 3, bevorzugt 1,
j ≥ 1 bis 50, bevorzugt 2 bis 40, mehr bevorzugt 3 bis 30 besonders bevorzugt 5 bis 20,
x = 2 bis 4,
k ≥ 0 bis zu 20, bevorzugt 0-15,
w = 1 bis 4, bevorzugt 1,
Summe j + k = 3 bis 150, bevorzugt 3 - 10
R⁹ = unabhängig voneinander ein Wasserstoffrest, ein einwertiger aliphatischer Kohlenwasserstoffrest mit 1 bis 18 C-Atomen, oder ein aromatisch Kohlenwasserstoffrest mit 6-18 C-Atomen, der gegebenenfalls auch ein substituierter Aromat sein kann, dessen Substituenten aus den Gruppen Wasserstoffrest, Alkylrest mit 1 bis 6 C-Atomen, Alkoxyrest und Hydroxyrest ausgewählt sind,
- Z¹ =: unabhängig voneinander ein Wasserstoffrest oder ein einwertiger organischer Rest, bevorzugt Wasserstoff, Methyl, Butyl oder -C(O)Me,
- Y =: ein (w+1)-bindiger Kohlenwasserstoffrest mit 1 bis 18 C-Atomen, der auch verzweigt sein kann, bevorzugt -(CH₂)₃-,
- R⁸: ein Polyetherrest der Formel (VI) ist

-(F)_{q}[O(C_{z}H_{2z}O)ᵣZ²]ᵤ Formel (VI)

wobei
u = 1 bis 4, bevorzugt 1,
q = 0 oder 1, bevorzugt 1
z = 2 bis 4, bevorzugt 2
r ≥ 3, bevorzugt 3-20, insbesondere bevorzugt 3-16,
F = ein (u+1)-bindiger Kohlenwasserstoffrest mit 1 bis 18 C-Atomen, der auch verzweigt sein kein, bevorzugt -(CH₂)₃-
Z² = unabhängig voneinander ein Wasserstoffrest oder ein einwertiger organischer Rest, bevorzugt Wasserstoff, Methyl, Butyl oder -C(O)Me,
jedoch mindestens 80 % der Reste R^{f} Methylreste sind.

Das Siloxangerüst der Polyether-Siloxane der Formel (IV) kann geradkettig (f + g = 0) oder aber verzweigt sein (f + g > 0). Im Falle von Index h und/oder Index q gleich null ist das Siloxangerüst bevorzugt verzweigt. Im Falle von Indices h und q jeweils gleich 1 ist Siloxangerüst bevorzugt geradkettig.

Die erfindungsgemäßen Verbindungen sind bei Raumtemperatur flüssig. Daher sind nicht alle Kombinationen der Werte für d, e, f und g möglich. Insbesondere wenn f und g ungleich 0 sind, muss d tendenziell größer sein als die Summe (f+g).

Die Werte von d, e, f und g sind als durchschnittliche Werte im Polymermolekül zu verstehen. Die erfindungsgemäß zu verwendenden Siliconpolyether-Copolymeren liegen bevorzugt in Form von äquilibrierten Gemischen vor.

Die Reste R⁶ sind Alkylreste mit 1 bis 4 Kohlenstoffatomen, wie Methyl-, Ethyl-, n-Propyl-, n-Butyl- oder Arylreste, wobei unter den Arylresten die Phenylreste bevorzugt sind. Methylreste sind bevorzugt, so daß mindestens 80 % der Reste R⁶ Methylreste sein sollen. Besonders bevorzugt sind solche Polyether-Siloxane der Formel (II), bei denen alle Reste R⁶ Methylreste sind.

Bei der Verwendung von Polyethersiloxanen als Entschäumer können die Polyethersiloxane, insbesondere Polyethersiloxane der Formel (II) einzeln oder als Mischungen eingesetzt werden. Vorzugsweise enthalten entsprechende Mischungen Polyethersiloxane, insbesondere solche der Formel (II), welche sich bezüglich ihrer Struktur und/oder ihrem Molekulargewicht unterscheiden.

Weiterhin bevorzugt sind Kombinationen von Entschäumern enthaltend mindestens ein Polyether-Siloxan der Formel (II) sowie mindestens ein Polydimethylsiloxan.

Es kann vorteilhaft sein, wenn der Entschäumer zusätzlich feinteilige Feststoffe enthält. Dies können sowohl anorganische als auch organische Feststoffe sein. Bevorzugte anorgansiche Feststoffe sind hydrophobierte Kieselsäuren, Aluminiumoxid, Erdalkalicarbonate und/oder ähnliche aus dem Stand der Technik bekannte und übliche feinteilige Feststoffe. Insbesondere sind hierbei hydrophobierte oder zumindest teilhydrophobierte Kieselsäuren, wie z.B. verschiedene Aerosil- oder Siperant-Typen der Firma Evonik Industries. Als organische Feststoffe sind bevorzugt Erdalkalisalze von langkettigen Fettsäuren mit 12 bis 22 Kohlenstoffatomen, die Amide dieser Fettsäuren sowie Polyharnstoffe. Die hier angeführten Feststoffe werden in sehr geringer Menge eingesetzt, so dass das Verstopfen von Düsen nicht zu befürchten ist, da die Mengen hier sehr viel kleiner sind als sie im Falle des Einsatzes von immobilisierten Adjuvantien auf z.B. Kieselsäuren wären. Bevorzugt sind hierbei Konzentrationen von max. 5 Gew.-% bezogen auf die Gesamtzusammensetzung.

Bevorzugt ist der Entschäumer selbstemulgierend. Selbstemulgierend bedeutet in diesem Zusammenhang, dass sich der Entschäumer ohne großen Schereintrag in Wasser dispergieren lässt und hierbei spontan Emulsionströpfchen mit einem mittleren Durchmesser kleiner 300 µm bevorzugt, kleiner 200 µm besonders bevorzugt kleiner 100 µm bildet. Hierbei kann es gegebenenfalls vorteilhaft sein, wenn der Entschäumerwirkstoff zuvor mit Emulgator abgemischt wird, welcher seine selbstemulgierenden Eigenschaften verstärken. Als Emulgatoren können hierbei bevorzugt ein oder mehrere nichtionische Emulgatoren verwendet werden.

Bevorzugte nichtionische Emulgatoren sind die Fettsäureester mehrwertiger Alkohole, deren Polyalkylenglycolderivate, die Polyglycolderivate von Fettsäuren und Fettalkoholen, Alkylphenolethoxylate sowie Blockcopolymere aus Ethylenoxid und Propylenoxid, ethoxylierte Amine, Aminoxide, Acetylendioltenside und Silicontenside. Mehr bevorzugt werden Polyglycolderivate von Fettsäuren und Fettalkoholen verwendet. Besonders bevorzugt sind als Polyglycolderivate Ethoxylate von Fettsäuren und Fettalkoholen. Insbesondere bevorzugt sind Ethoxylate basierend auf Oleyl- und Stearylsäure oder selbige Alkohole.

Die erfindungsgemäßen Zusammensetzungen können nach den Methoden des Standes der Technik hergestellt werden, bevorzugt werden sie jedoch nach dem erfindungsgemäßen Verfahren hergestellt.

Bevorzugt weist das Verfahren die Schritte a) bis c) auf:
Schritt a) Aufschmelzen des festen, wasserlöslichen Trägers und Temperieren auf eine Temperatur oberhalb des Schmelzpunktes, bevorzugt 2 bis 100°C oberhalb des Schmelzpunktes, mehr bevorzugt 5 bis 50°C, besonders bevorzugt 10 bis 30°C oberhalb des Schmelzpunktes. Optional enthält der Träger eine gewisse Menge eines Lösungsmittels, bevorzugt Wasser.

Schritt b) Zugabe einer grenzflächenaktiven Substanz zum geschmolzenen Träger des Schrittes a) unter Rühren, wobei bevorzugt keine größeren Scherkräfte aufgebracht werden.

Schritt c) Abkühlung der Mischung aus Schritt c) unter den Schmelzpunkt, bevorzugt auf eine Temperatur von 10 bis 150°C, mehr bevorzugt von 20 bis 100°C, besonders bevorzugt von 30 bis 50°C unter den Schmelzpunkt der Mischung. Bevorzugt wird das Abkühlungsverfahren dergestalt geführt, dass die erfindungsgemäße Zusammensetzung beim Abkühlen in feine Partikel überführt wird. Enthielt der Träger eine gewisse Menge eines Lösungsmittels, so wird die Abkühlung bevorzugt so ausgeführt, dass das Lösungsmittel dabei entfernt wird.

Nach Schritt b) kann die Separationsstabilität der Mischung bestimmt werden, indem der Rührer abgestellt wird. Handelt es sich um eine klare Mischung, so kann diese nicht separieren. Ist die Mischung trübe, dann wird eine Probe in ein durchsichtiges zylindrisches Glasgefäß überführt, oberhalb des Schmelzpunktes temperiert wie in Schritt a) erläutert und 1 Stunde ruhig belassen. Danach wird optisch beurteilt, ob eine Phasenseparation zu beobachten ist oder die Trübung einen Gradienten über die Füllhöhe bildet. Ist beides nicht der Fall wird die trübe Mischung als fein dispers und separationsstabil angesehen.

Bevorzugte Abkühlungsverfahren im Schritt c) sind Sprühtrocknung und Sprühkristallisation, mehr bevorzugt Sprühkristallisation.

Wird Schritt c) so ausgeführt, dass die Mischung nicht fein partikulär vorliegt, so kann sich ein optionaler Schritt d) anschließen, indem die abgekühlte Mischung mechanisch zerkleinert wird. Diese Zerkleinerung kann gegebenenfalls auch unter weiterer (Ab)kühlung durchgeführt werden. Es ist dem Fachmann bekannt, dass einige der bevorzugten Trägermaterialien einen glasartigen Zustand durchlaufen und bei weiterer Temperaturabsenkung sehr spröde werden, damit kann also der mechanische Aufwand gegebenenfalls verringert werden, indem das zu zerkleinernde Gut abgekühlt wird.

Ein Vorteil des erfindungsgemäßen Verfahrens ist, dass die Produkte nicht verklumpen, sie weisen eine gute Rieselfähigkeit auf. Sie sind damit problemlos anzuwenden, Mischverfahren werden vereinfacht.

Die bevorzugte Sprühkristallisation einer Schmelze aus Träger und grenzflächenaktiver Substanz wird im Schritt c) so ausgeführt, dass die flüssige Schmelze zerstäubt wird und dabei in einen kalten Luftstrom gesprüht wird, wobei die Temperatur des Luftstroms unterhalb der Erstarrungstemperatur des Trägers liegt. Hierbei kommt es zu einer Kristallisation der Mischung. Da die Mischung während des Erstarrens in Form eines Sprays vorliegt, sind die festen Träger-Wirkstoff-Mischungen durch Sprühkristallisation direkt in Form eines Pulvers zugänglich, wobei die Korngrößenverteilung des Pulvers leicht durch Einstellen der Tröpfchengröße beim Versprühen der Schmelze einstellbar ist. Für eine detaillierte Beschreibung dieses bevorzugten Verfahrens siehe z.B. C.M. Van't Land "Industrial Crystallization of Melts", 2005, Marcel Dekker Verlag*.* Andere dem Fachmann bekannt feste Aggregatzustände wie z.B. amorphe Strukturen, metastabile Kristallformen oder Gläser sind als Äquivalente zu Kristallen anzusehen.

In einem weiteren alternativen Verfahren wird eine Lösung des Trägers und der grenzflächenaktiven Substanz bevorzugt eine wässrige Lösung Sprühgetrocknet. Dabei wird bevorzugt eine konzentrierte Lösung bei einer Temperatur, welche 10 - 200 °C bevorzugt 20 - 150 °C, besonders bevorzugt 30 - 100 °C über der Siedetemperatur des Lösemittels liegt, getrocknet.

In einer bevorzugten Ausführungsform werden die erfindungsgemäßen Zusammensetzungen als Adjuvantien oder Entschäumer in Pflanzenschutzformulierungen verwendet.

Die Verwendung der erfindungsgemäßen Zusammensetzungen als Antidrift-Additive ist ebenfalls Gegenstand der vorliegenden Erfindung.

Bevorzugt ist die erfindungsgemäße Verwendung der Adjuvantien oder Entschäumer aufweisenden Pflanzenschutzformulierungen gleichzeitig als Antidrift-Additiv.

Erfindungsgemäß bevorzugt ist hierbei die Verwendung als Additive in sogenannten WDG-Formulierungen (water dispersible granulate), wobei WDGs eine bevorzugte Darreichungsform der Agrarindustrie sind.

Die Verwendung der erfindungsgemäßen Zusammensetzungen als Adjuvantien in Pflanzenschutzformulierungen erfolgt hierbei unter der Maßgabe, dass die Effektivität der Pflanzenschutzformulierung durch die erfindungsgemäßen Zusammensetzungen erhöht wird.

Die Verwendung der erfindungsgemäßen Zusammensetzungen als Entschäumer in Pflanzenschutzformulierungen erfolgt unter der Maßgabe, dass Schaumbildung während der Anwendung, z.B. beim Ansetzen der Spritzbrühe, verringert bzw. unterdrückt wird.

Die Verwendung der erfindungsgemäßen Zusammensetzungen als Anti-Drift-Mittel in Pflanzenschutzformulierungen erfolgt unter der Maßgabe, dass beim Versprühen der Pflanzenschutzformulierung der Anteil an Drift-fähigen Tröpfchen (< 150 µm) im Sprühnebel verringert wird.

Die erfindungsgemäßen Zusammensetzungen haben den Vorteil, dass sich während der Anwendung der wasserlösliche Träger vollständig in der Spritzbrühe löst und das Additiv somit vollständig freigesetzt wird, wodurch Wirksamkeitsverluste vermieden werden.

Das vollständige Auflösen des wasserlöslichen Trägers in der Spritzbrühe hat überdies den Vorteil, dass keine Vorstopfung der Spritzbrühen durch den Träger erfolgen kann. Ebenfalls werden Verunreinigungen des Spritztanks durch ein Anhaften des Trägers vermieden.

Bedingt durch die Wasserlöslichkeit des Trägers haben die erfindungsgemäßen Zusammensetzungen überdies den generellen Vorteil, dass sie sich leicht in wässrige Formulierungen wie z.B. Spritzbrühen einarbeiten lassen.

Weiterhin haben die erfindungsgemäßen Zusammensetzungen den Vorteil, dass sie leicht der pulverförmigen WDG-Formulierung beigemengt werden können und nicht mehr in flüssiger Form in die Slurry, welche dem WDG zugrunde liegt, gemischt werden müssen. Dies bietet, je nach der Art des verwendeten Additivs, gewisse prozesstechnische Vorteile. Im Falle in Wasser stark schäumender Additive (z.B. Trisiloxan-Tenside) kann so Schaumbildung während der WDG-Herstellung vermieden werden. Im Falle von inkompatiblen Additiven, wie z.B. Entschäumern, kann durch die pulverförmige Darreichungsform eine homogene Einarbeitung und Verteilung in der WDG-Formulierung erreicht werden.

Das nachträgliche Einbringen der festen Additiv-Zusammensetzung zur pulverförmigen WDG-Formulierung hat überdies den Vorteil, dass das Additiv fest in seinen wasserlöslichen Träger eingebettet ist und somit während der Herstellung der WDGs nicht mehr mit anderen Formulierungsbestandteilen wechselwirken kann. Auch hierdurch werden Wirksamkeitsverluste bei der Anwendung vermieden.

Ein weiterer Gegenstand sind Pflanzenschutzformulierungen enthaltend die erfindungsgemäßen festen, pulverförmigen Zusammensetzungen enthaltend mindestens einen festen, wasserlöslichen Träger sowie mindestens eine grenzflächenaktive Substanz, dadurch gekennzeichnet, dass die grenzflächenaktive Substanz ein Polyethersiloxan ist, und dass der wasserlösliche Träger ein polymeres Material ist ausgewählt aus Homopolymeren, wobei die Homopolymere ausgewählt sind aus Polyethylenglycol.

Bevorzugt sind Pflanzenschutzformulierungen, welche ein Pflanzenschutzmittel ausgewählt sind aus der Gruppe der Akarizide (AC), Algizide (AL), Attraktanzien (AT), Repellentien (RE), Bakterizide (BA), Fungizide (FU), Herbizide (HE), Insektizide (IN), Mittel gegen Schnecken Molluskizide (MO), Nematizide (NE), Rodentizide (RO), Sterilisierungsmittel (ST), Viridizide (VI), Wachstumsregulatoren (PG), Pflanzenstärkungsmittel (PS), Mikronährstoffe (MI), Makronährstoffe (MA) oder Mischungen dieser Substanzen; solche Substanzen sowie, deren Anwendungsgebiet sind dem Fachmann bekannt. Einige dieser Wirkstoffe oder Wirkorganismen sind beispielhaft im 'The Pesticide Manual', 14th edition, 2006, The British Crop Protection Council, oder in 'The Manual of Biocontrol Agents', 2004, The British Crop Protection Council aufgelistet. Die vorliegende Anmeldung beschränkt sich jedoch nicht nur auf diese dort aufgeführten Wirkstoffe.

Ein weiterer Vorteil der erfindungsgemäßen Verwendung ist der schnelle Anstieg der Wirksamkeit. Damit eröffnet sich für den Anwender eine Verlängerung des Anwendungsfensters. So können auch Pflanzen behandelt werden, die schon älter sind, ohne dass die Gefahr besteht, dass diese noch vor dem Absterben Früchte ausbilden. Dieser Effekt ist unter dem Begriff Notreife dem Fachmann bekannt.

### Beispiele:

### Allgemeine Methoden und Materialien

### Substanzen:

Break-Thru® S200, Break-Thru® S233, Break-Thru® S240, Break Thru® S301 (Warenzeichen der Evonik Industries AG); polyether-modifizierte Trisiloxan-Tenside Tego Antifoam KS 53 (Warenzeichen der Evonik Industries AG); pflanzenöl-basierter Entschäumerwirkstoff enthaltend nichtionische Tenside und Kieselsäure Tego Antifoam 793 (Warenzeichen der Evonik Industries AG); polyethersiloxanbasierter Entschäumerwirkstoff enthaltend Kieselsäure
PEG 6000 von der Firma Sasol Germany GmbH
Hostapur SAS 30 ist anionisches Tensid (sekundäres Alykl-Sulphonat-Natrium-Salz) von der Firma Clariant

### Beispiel 1: Herstellung von festen Trisiloxan-Zusammensetzungen

Zur Herstellung der erfindungsgemäßen Zusammensetzungen wurden Polyethylengylcol mit einer mittleren Molmasse von 6000 g/mol (PEG 6000) als wasserlöslicher Träger verwendet. 100 g dieses Trägers wurden in einem Becherglas bei 75 °C aufgeschmolzen. Zu dieser Schmelze wurden unter ständigem Rühren die in Tabelle 1 aufgelisteten Trisiloxan-Tenside gegeben. Die entsprechenden Einwaagen sind ebenfalls in Tabelle 1 aufgelistet. Hierbei konnte in allen Fällen beobachtet werden, dass sich nach kurzer Zeit homogene, klare Mischungen aus PEG 6000 und dem Trisiloxan bildeten. Diese Mischungen wurden anschließend zum Erstarren in eine Aluminium-Schale gegossen, zerkleinert und anschließend mit einer Labormühle zu einem Pulver vermahlen.

**Tabelle 1: Erfindungsgemäße Zusammensetzungen bestehend aus Trisiloxan-Tensid und PEG 6000 als festen, wasserlöslichen Träger**

| Probe | Adjuvant | Einwaage. [g] | Produktform |
|---|---|---|---|
| P1 | Break-Thru® S200 | 25 | Rieselfähiges Pulver |
| P2 | Break-Thru® S200 | 42,8 | Rieselfähiges Pulver |
| P3 | Break-Thru® S233 | 25 | Rieselfähiges Pulver |
| P4 | Break-Thru® S233 | 42,8 | Rieselfähiges Pulver |
| P5 | Break-Thru® S240 | 25 | Rieselfähiges Pulver |
| P6 | Break-Thru® S240 | 42,8 | Rieselfähiges Pulver |
| P7 | Break-Thru® S301 | 25 | Rieselfähiges Pulver |
| P8 | Break-Thru® S301 | 42,8 | Rieselfähiges Pulver |

### Beispiel 2: Herstellung von festen Entschäumer-Zusammensetzungen.

Zur Herstellung von festen Entschäumer-Zusammensetzungen wurde Polyethylenglycol mit einer mittleren Molmasse von 6000 g/mol (PEG 6000) als wasserlöslicher Träger verwendet. 100 g dieses Trägers wurden in einem Becherglas bei 75 °C aufgeschmolzen. Zu dieser Schmelze wurden unter ständigem Rühren die Tabelle 2 aufgelisteten Entschäumerwirkstoffe gegeben. Diese Mischungen wurden anschließend zum Erstarren in eine Aluminium-Schale gegossen, zerkleinert und anschließend mit einer Labormühle zu einem Pulver vermahlen. Hierbei konnte beobachtet werden, dass in allen Fällen eine zwar trübe aber ausreichend separationsstabile Dispersion der Entschäumerwirkstoffe in PEG 6000 gebildet wurde, welche ohne Phasenseparation erstarrt werden konnte.

**Tabelle 2: Zusammensetzungen bestehend aus Entschäumerwirkstoffen und PEG 6000 als festen, wasserlöslichen Träger**

| Probe | Adjuvant | Einwaage. [g] | Produktform |
|---|---|---|---|
| P9 | Tego Antifoam KS 53 | 25 | Rieselfähiges Pulver |
| P10 | Tego Antifoam KS 53 | 42,8 | Rieselfähiges Pulver |
| P11 | Tego Antifoam 793 | 25 | Rieselfähiges Pulver |
| P12 | Tego Antifoam 793 | 42,8 | Rieselfähiges Pulver |

### Beispiel 3: Rieselfähigkeit der Pulver

Zur Bestimmung der Fließfähigkeit (Rieselfähigkeit) ohne Druckbehandlung wurden silikonisierte Glasauslaufgefäße mit unterschiedlichen Auslaufdurchmessern verwendet (gemäß Literatur: Seifen, Öle, Fette, Wachse 1968, 94, 12). Die Bewertung erfolgte entsprechend den Noten: 1 = sehr gutes Fließverhalten (das zu untersuchende Pulver fließt ohne Stocken aus dem Auslaufgerät Nr. 1 mit der kleinsten Auslauföffnung) bis zur Note 6 = ungenügendes Fließverhalten (das Pulver fließt auch durch das Messgefäß Nr. 5 mit der größten Auslauföffnung nicht mehr aus). Das Messverfahren wurde bei stets gleicher Reihenfolge der Auslaufgefäße 6 bis 1 durchgeführt. Bestimmt wurde das Messgefäß, bei dem die pulverförmige Zusammensetzung gerade noch ohne Stocken ausfließt. Es wurden pro Probe je 10 Versuche unternommen und jeweils der Mittelwert auf halbe Noten genau berechnet.

Die Versuche zeigen, dass die Rieselfähigkeit aller erfindungsgemäßen Proben mindestens gut ist.

### Bespiel 4: Entschäumungstests

Die Ausprüfung der entschäumenden Wirkung erfolgte in einer 0,2 %-igen Lösung des anionischen Tensids Hostapur SAS 30. 1 Liter dieser Lösung in einen 2 Liter Messzylinder gefüllt, mit je 100 mg der zu prüfenden festen Entschäumer-Zusammensetzung versetzt (Proben P9 bis P12) und unter gelindem Rühren homogenisiert. Hierbei konnte beobachtet werden, dass sich alle Zusammensetzungen gut homogenisieren ließen. Anschließend wurde durch diese Lösung für 60 Minuten über eine Glasfritte Luft mit einem definierten Volumenstrom von 600 ml/min geleitet. Nach diesen 60 Minuten konnte in allen Fällen ein Schaumbildung von < 500 ml beobachtet werden. Als Referenz wurde zusätzlich ein Versuch durchgeführt, in welchem unter gleichen Bedingungen Luft durch eine entschäumerfreie Hostapur-Lösung geleitet wurde. Hierbei konnte bereits nach 4 min eine Schaumbildung von > 1000 ml beobachtet werden, sodass der Versuch vorzeitig abgebrochen werden musste.

### Beispiel 5: Anwendung als Adjuvant

### Versuche:

Untersucht wurde der Einfluss der erfindungsgemäßen Zusammensetzung P7 als Tankmix-Additiv auf die Wirkung von Cato (Rimsulfuron) - Gewächshaus-Screening gegen *Echinochloa crus-galli* (Hühnerhirse), *Galium aparine* (Klettenlabkraut) und *Matricaria* spec. (Kamille).

Die Pflanzen wurden vier Wochen in Frustorfer Erde (Spezialmischung "fein") kultiviert. Zum Zeitpunkt der Applikation waren die Pflanzen im 3-4 Blattstadium. Die Applikation der Spritzbrühen erfolgte mit einer Membranpumpe unter dem Abzug. Die Konzentration von Cato (Rimsulfuron) für die Blattapplikation an ganzen Pflanzen wurde auf 40 g/ha(N) bzw. 20 g/ha (N/2) eingestellt. Die Auswertung der herbiziden Wirkung erfolgte nach 2, 3 und 4 Wochen in Abhängigkeit der Wirkung, WAT (week after treatment).
Eine Wirkung von unter 60% wird als schlecht klassifiziert, zwischen 60 und 80% als moderat, 80 bis 90% als gut, 90 bis 95% als sehr gut und mehr als 95% als ausgezeichnet. Der Maximalwert liegt bei 100%.

### Ergebnisse:

Die Wirkung von Cato auf *Matricaria* spec. lag in beiden Dosierungen nach 2 WAT dosierungsabhängig im moderaten Bereich zwischen 74 und 80 %, so dass eine Differenzierung zwischen den Prüfpräparaten möglich war (Tab. 3). Besonders deutlich fiel diese Verbesserung der Wirkung bei P7 mit > 90 % aus.
3 WAT konnte mit den Prüfpräparaten eine vergleichbare Wirkung zu der höheren Dosierung von Cato erreicht werden.

**Tabelle 3: Wirkung (%) gegen Matricaria spec. (Kamille) zwei und drei Wochen nach Behandlung**

| Versuchsglied | Wirkung [%], 2 WAT | Wirkung [%], 3 WAT |
|---|---|---|
| Cato 40 g/ha | 80,0 | 97,5 |
| Cato 20 g/ha | 73,8 | 82,5 |
| Cato 20 g/ha + P7 in 100 g/ha | 77,5 | 82,5 |
| Cato 20 g/ha + P7 in 250 g/ha | 95,0 | 100,0 |

Die alleinige Anwendung von Cato auf *Galium aparine* führte zu einer moderaten Wirkung von 71 % in der niedrigen Dosierung von 20g/ha und einer bereits guten Wirkung von 84 % in der höheren Dosierung von 40 g/ha.
Mit P7 konnte eine deutliche Wirkungssteigerung erreicht werden.

**Tabelle 4 : Wirkung (%) gegen Galium aparine drei Wochen nach Behandlung**

| Versuchsglied | Wirkung [%], 3 WAT |
|---|---|
| Cato 40 g/ha | 83,8 |
| Cato 20 g/ha | 71,3 |
| Cato 20 g/ha + P7 in 100 g/ha | 77,5 |
| Cato 20 g/ha + P7 in 250 g/ha | 91,3 |

Die Anfangswirkung von Cato auf *Echinochloa crus-galli* war im unteren moderaten Bereich und lag dosierungsabhängig bei 71 bzw. 76 % (Tab. 5). Es zeichnete sich aber bereits zu diesem frühen Zeitpunkt, 2 WAT, eine Verbesserung der Wirkung von Cato durch P7 ab. 3 WAT zeigte sich deutlich die verbesserte Wirkung durch P7, die 4 WAT in einer 100%igen Kontrolle von *Echinochloa crus-galli* gipfelte.

**Tabelle 5: Wirkung (%) gegen Echinochloa crus-galli zwei, drei und vier Wochen nach Behandlung**

| Versuchsglied | Wirkung [%], 2 WAT | Wirkung [%], 3 WAT | Wirkung [%], 4 WAT |
|---|---|---|---|
| Cato 40 g/ha | 76,3 | 78,8 | 83,8 |
| Cato 20 g/ha | 71,3 | 73,8 | 78,8 |
| Cato 20 g/ha + P7 in 100 g/ha | 78,8 | 80,0 | 95,0 |
| Cato 20 g/ha + P7 in 250 g/ha | 90,0 | 92,5 | 100,0 |

Mit den Versuchen wurde gezeigt, dass die erfindungsgemäße Verwendung zu einer absoluten Wirkungsverbesserung und einem schnelleren Anstieg der Wirkung über die Zeit führte. Zudem führte bereits eine geringe Dosierung der Pestizide zu einer besseren Wirkung gegenüber der Anwendung des Pestizids ohne der erfindungsgemäßen Zusammensetzung P7 auch nach längerer Zeit. Es wurde durch die erfindungsgemäße Verwendung eine erhebliche Verkürzung der Behandlungszeit beobachtet. Im Fall des schwer bekämpfbaren *Echinochloa* sogar um die Hälfte bei bereits sehr guter Wirksamkeit.

## Patentansprüche

1. Feste, pulverförmige Zusammensetzungen enthaltend mindestens einen festen, wasserlöslichen Träger sowie mindestens eine grenzflächenaktive Substanz **dadurch gekennzeichnet, dass** die grenzflächenaktive Substanz ein Polyethersiloxan ist, und dass der wasserlösliche Träger ein polymeres Material ist ausgewählt aus Homopolymeren, wobei die Homopolymere ausgewählt sind aus Polyethylenglycol.

2. Feste, pulverförmige Zusammensetzungen nach Anspruch 1 **dadurch gekennzeichnet, dass** die polymeren Trägermaterialien ein Molgewicht im Bereich von 600 - 20000 g/mol, besonders bevorzugt im Bereich von 1000 - 15000 g/mol, insbesondere bevorzugt im Bereich von 2000 - 10000 g/mol aufweisen.

3. Feste, pulverförmige Zusammensetzungen nach Anspruch 1 bis 2 **dadurch gekennzeichnet, dass** der wasserlösliche Träger mit 1 - 75 Gew.-%, besonders bevorzugt mit 3 - 50 Gew.-%, insbesondere bevorzugt mit 5 - 40 Gew.-% grenzflächenaktiver Substanzen bezogen auf die Gesamt-Zusammensetzung beladen ist.

4. Feste, pulverförmige Zusammensetzungen nach Anspruch 1 bis 3 **dadurch gekennzeichnet, dass** die grenzflächenaktive Substanz ein polyethylenoxid-polypropylenoxid-modifiziertes Polyethersiloxan ist.

5. Feste, pulverförmige Zusammensetzungen nach Anspruch 1 bis 4 **dadurch gekennzeichnet, dass** die grenzflächenaktiven Substanzen Polyethersiloxanen der allgemeinen Formel (I) entsprechen:
MₐD_{b}D'_{c} Formel (I)
mit M = R¹₃SiO_{1/2}, D = R¹₂SiO_{2/2}, D' = R¹R²SiO_{2/2},
wobei
a gleich 2,
b zwischen 0 und 0,1, bevorzugt 0,
c zwischen 1,0 und 1,15, bevorzugt zwischen 1,0 und 1,10, insbesondere bevorzugt zwischen 1,00 und 1,05,
R¹ unabhängig voneinander Kohlenwasserstoff mit 1 bis 8 Kohlenstoffatomen, bevorzugt Methyl-, Ethyl-, Propyl-, oder Phenyl-Reste, insbesondere bevorzugt Methyl-Reste,
R² unabhängig voneinander ein Polyether-Rest der Formel (II)
-R³O[CH₂CH₂O]ₘ[CH₂CH(CH₃)O]ₙR⁵ Formel (II)
wobei
m = 3,4 bis 11,0, bevorzugt 3,6 bis 9,9, mehr bevorzugt 4,5 bis 8,5,
n = 2,5 bis 8,0 bevorzugt 2,7 bis 7,5, mehr bevorzugt 3,0 bis 6,0,
jedoch mit den Maßgaben, dass gilt:
m/n = 0,44 bis 3,08, bevorzugt 0,55 bis 3,00, mehr bevorzugt 0,8 bis 2,9, weiter mehr bevorzugt mehr als 1,2 bis zu 2,85, insbesondere bevorzugt 1,9 bis 2,8, R³ unabhängig voneinander divalente Kohlenwasserstoffreste mit 2 bis 8 Kohlenstoffatomen, bevorzugt Ethylen-, Propylen- 1-Methylpropylen-, 1,1-Dimethylpropylen-Rest, insbesondere bevorzugt -CH₂CH₂CH₂-,
R⁵ unabhängig voneinander Kohlenwasserstoffrest mit 1 bis 16 Kohlenwasserstoffen oder Wasserstoff, bevorzugt Wasserstoff oder Methyl, insbesondere Wasserstoff.

6. Feste, pulverförmige Zusammensetzungen nach Anspruch 1 bis 4 **dadurch gekennzeichnet, dass** die grenzflächenaktiven Substanzen Polyethersiloxanen der allgemeinen Formel (I) entsprechen:
M_{d}DₑT_{f}Q_{g} Formel (IV)
M = [R^{f}₃SiO_{1/2}]
D = [R^{f}₂SiO_{2/2}]
T = [R^{f}SiO_{3/2}]
Q = [SiO_{4/2}]
wobei
d = 2 bis 22, bevorzugt, 2 bis 14, insbesondere 2,
e = 1 bis 500, bevorzugt, 1 bis 300, insbesondere 1 bis 250,
f = 0 bis 16, bevorzugt, 0 bis 8, insbesondere 0,
g = 0 bis 10, bevorzugt, 0 bis 6, insbesondere 0,
wobei der Rest R^{f} ein Rest R⁶, R⁷ oder R⁸ ist, mit der Maßgabe, dass mindestens ein Rest R^{f} ein Rest R⁷ ist, wobei
R⁶ ein Alkylrest mit 1 bis 16, bevorzugt 1-4 Kohlenstoffatomen oder ein Arylrest ist,
R⁷ ein Polyetherrest der Formel (V) ist
-(Y)ₕ[O(C₂H₄₋ᵢR⁹O)ⱼ(CₓH₂ₓO)ₖZ¹]_{w} Formel (V)
wobei
h = 0 oder 1, bevorzugt 1,
i = 1 bis 3, bevorzugt 1,
j ≥ 1 bis 50, bevorzugt 2 bis 40, mehr bevorzugt 3 bis 30 besonders bevorzugt 5 bis 20,
x = 2 bis 4,
k ≥ 0 bis zu 20, bevorzugt 0-15,
w = 1 bis 4, bevorzugt 1,
Summe j + k = 3 bis 150, bevorzugt 3 bis 10
R⁹ = unabhängig voneinander ein Wasserstoffrest, ein einwertiger aliphatischer Kohlenwasserstoffrest mit 1 bis 18 C-Atomen, oder ein aromatisch Kohlenwasserstoffrest mit 6-18 C-Atomen, der gegebenenfalls auch ein substituierter Aromat sein kann, dessen Substituenten aus den Gruppen Wasserstoffrest, Alkylrest mit 1 bis 6 C-Atomen, Alkoxyrest und Hydroxyrest ausgewählt sind,
Z¹ = unabhängig voneinander ein Wasserstoffrest oder ein einwertiger organischer Rest, bevorzugt Wasserstoff, Methyl, Butyl oder -C(O)Me,
Y = ein (w+1)-bindiger Kohlenwasserstoffrest mit 1 bis 18 C-Atomen, der auch verzweigt sein kann, bevorzugt -(CH₂)₃-,
R⁸ ein Polyetherrest der Formel (VI) ist
-(F)_{q}[O(C_{z}H_{2z}O)ᵣZ²]ᵤ Formel (VI)
wobei
u = 1 bis 4, bevorzugt 1,
q = 0 oder 1, bevorzugt 1
z = 2 bis 4, bevorzugt 2
r ≥ 3, bevorzugt 3-20, insbesondere bevorzugt 3-16,
F = ein (u+1)-bindiger Kohlenwasserstoffrest mit 1 bis 18 C-Atomen, der auch verzweigt sein kein, bevorzugt -(CH₂)₃-
Z² = unabhängig voneinander ein Wasserstoffrest oder ein einwertiger organischer Rest, bevorzugt Wasserstoff, Methyl, Butyl oder -C(O)Me,
jedoch mindestens 80 % der Reste R^{f} Methylreste sind.

7. Feste, pulverförmige Zusammensetzungen nach Anspruch 1 bis 6 **dadurch gekennzeichnet, dass** das grenzflächenaktive Additiv im festen, wasserlöslichen Träger fein dispergiert ist.

8. Verfahren zur Herstellung der festen, pulverförmigen Zusammensetzungen nach Anspruch 1 bis 7 enthaltend mindestens einen festen, wasserlöslichen Träger sowie mindestens eine grenzflächenaktive Substanz, **dadurch gekennzeichnet, dass** es die Schritte a) bis c) aufweist:
Schritt a) Aufschmelzen des festen, wasserlöslichen Trägers und Temperieren auf eine Temperatur oberhalb des Schmelzpunktes, bevorzugt 2 bis 100°C oberhalb des Schmelzpunktes, mehr bevorzugt 5 bis 50°C, besonders bevorzugt 10 bis 30°C oberhalb des Schmelzpunktes. Optional enthält der Träger eine gewisse Menge eines Lösungsmittels, bevorzugt Wasser;
Schritt b) Zugabe einer grenzflächenaktiven Substanz zum geschmolzenen Träger des Schrittes a) unter Rühren, wobei bevorzugt keine größeren Scherkräfte aufgebracht werden;
Schritt c) Abkühlung der Mischung aus Schritt b) unter den Schmelzpunkt, bevorzugt auf eine Temperatur von 10 bis 150°C, mehr bevorzugt von 20 bis 100°C, besonders bevorzugt von 30 bis 50°C unter den Schmelzpunkt der Mischung. Bevorzugt wird das Abkühlungsverfahren dergestalt geführt, dass die erfindungsgemäße Zusammensetzung beim Abkühlen in feine Partikel überführt wird. Enthielt der Träger eine gewisse Menge eines Lösungsmittels, so wird die Abkühlung bevorzugt so ausgeführt, dass das Lösungsmittel dabei entfernt wird.

9. Verwendung der festen, pulverförmigen Zusammensetzungen nach einem der Ansprüche 1 bis 7 und der Verfahrensprodukte nach Anspruch 8 in wässriger Lösung.

## Claims

1. Solid pulverized compositions comprising at least one solid water-soluble carrier and at least one interface-active substance, **characterized in that** the interface-active substance is a polyether siloxane, and **in that** the water-soluble carrier is a polymeric material selected from homopolymers, where the homopolymers are selected from polyethylene glycol.

2. Solid pulverized compositions according to Claim 1, **characterized in that** the polymeric carrier materials have a molar mass in the range of 600-20 000 g/mol, more preferably in the range of 1000-15 000 g/mol, especially preferably in the range of 2000-10 000 g/mol.

3. Solid pulverized compositions according to Claim 1 or 2, **characterized in that** the water-soluble carrier is laden with 1%-75% by weight, more preferably with 3%-50% by weight, especially preferably with 5%-40% by weight, of interface-active substances, based on the overall composition.

4. Solid pulverized compositions according to Claim 1 to 3, **characterized in that** the interface-active substance is a polyethylene oxide-polypropylene oxide-modified polyether siloxane.

5. Solid pulverized compositions according to Claim 1 to 4, **characterized in that** the interface-active substances are polyether siloxanes of the general formula (I):
MₐD_{b}D'_{c} Formula (I)
with M = R¹₃SiO_{1/2}, D = R¹₂SiO_{2/2}, D' = R¹R²SiO_{2/2},
where
a is 2,
b is between 0 and 0.1, preferably 0,
c is between 1.0 and 1.15, preferably between 1.0 and 1.10, especially preferably between 1.00 and 1.05,
R¹ are independently hydrocarbyl having 1 to 8 carbon atoms, preferably methyl, ethyl, propyl or phenyl radicals, especially preferably methyl radicals,
R² is independently a polyether radical of the formula (II)
-R³O[CH₂CH₂O]ₘ[CH₂CH(CH₃)O]ₙR⁵ Formula (II)
where
m = 3.4 to 11.0, preferably 3.6 to 9.9, more preferably 4.5 to 8.5,
n = 2.5 to 8.0, preferably 2.7 to 7.5, more preferably 3.0 to 6.0,
but with the provisos that:
m/n = 0.44 to 3.08, preferably 0.55 to 3.00, more preferably 0.8 to 2.9, even more preferably more than 1.2 up to 2.85, especially preferably 1.9 to 2.8,
R³ are independently divalent hydrocarbyl radicals having 2 to 8 carbon atoms, preferably ethylene, propylene, 1-methylpropylene, 1,1-dimethylpropylene radical, especially preferably -CH₂CH₂CH₂-,
R⁵ are independently hydrocarbyl radicals having 1 to 16 carbon atoms or hydrogen, preferably hydrogen or methyl, especially hydrogen.

6. Solid pulverized compositions according to Claim 1 to 4, **characterized in that** the interface-active substances are polyether siloxanes of the general formula (I):
M_{d}DₑT_{f}Q_{g} Formula (IV)
M = [R^{f}₃SiO_{1/2}]
D = [R^{f}₂SiO_{2/2}]
T = [R^{f}SiO_{3/2}]
Q = [SiO_{4/2}]
where
d = 2 to 22, preferably 2 to 14, especially 2,
e = 1 to 500, preferably 1 to 300, especially 1 to 250,
f = 0 to 16, preferably 0 to 8, especially 0,
g = 0 to 10, preferably 0 to 6, especially 0,
where the radical R^{f} is a radical R⁶, R⁷ or R⁸, with the proviso that at least one radical R^{f} is a radical R⁷, where
R⁶ is an alkyl radical having 1 to 16, preferably 1-4, carbon atoms or an aryl radical,
R⁷ is a polyether radical of the formula (V)
- (Y)ₕ[O(C₂H₄₋ᵢR⁹O)ⱼ(CₓH₂ₓO)ₖZ¹]_{w} Formula (V)
where
h = is 0 or 1, preferably 1,
i = 1 to 3, preferably 1,
j ≥ 1 to 50, preferably 2 to 40, more preferably 3 to 30, especially preferably 5 to 20,
x = 2 to 4,
k ≥ 0 up to 20, preferably 0-15,
w = 1 to 4, preferably 1,
sum of j + k = 3 to 150, preferably 3 to 10
R⁹ = independently a hydrogen radical, a monovalent aliphatic hydrocarbon radical having 1 to 18 carbon atoms, or an aromatic hydrocarbon radical having 6-18 carbon atoms, which may optionally also be a substituted aromatic having substituents selected from the group of hydrogen radical, alkyl radical having 1 to 6 carbon atoms, alkoxy radical and hydroxyl radical,
Z¹ = independently a hydrogen radical or a monovalent organic radical, preferably hydrogen, methyl, butyl or -C(O)Me,
Y = a (w+1)-valent hydrocarbyl radical which has 1 to 18 carbon atoms and may also be branched, preferably -(CH₂)₃-,
R⁸ is a polyether radical of the formula (VI)
- (F) _{q}[O(C_{z}H_{2z}O)ᵣZ²]ᵤ Formula (VI)
where
u = 1 to 4, preferably 1,
q = 0 or 1, preferably 1,
z = 2 to 4, preferably 2,
r ≥ 3, preferably 3-20, especially preferably 3-16,
F = a (u+1)-valent hydrocarbon radical having 1 to 18 carbon atoms, which can also be branched, preferably -(CH₂)₃-
Z² = independently a hydrogen radical or a monovalent organic radical, preferably hydrogen, methyl, butyl or -C(O)Me,
but at least 80% of the radicals R^{f} are methyl radicals.

7. Solid pulverized compositions according to Claim 1 to 6, **characterized in that** the interface-active additive is finely dispersed in the solid water-soluble carrier.

8. Process for producing the solid pulverized compositions according to Claim 1 to 7, comprising at least one solid water-soluble carrier and at least one interface-active substance, **characterized in that** it has steps a) to c):
Step a) melting the solid water-soluble carrier and heating it to a temperature above the melting point, preferably 2 to 100°C above the melting point, more preferably 5 to 50°C, especially preferably 10 to 30°C, above the melting point. The carrier optionally contains a certain amount of a solvent, preferably water.
Step b) adding an interface-active substance to the molten carrier from step a) while stirring, preferably without application of any great shear forces.
Step c) cooling the mixture from step b) down below the melting point, preferably to a temperature of 10 to 150°C, more preferably of 20 to 100°C, especially preferably of 30 to 50°C, below the melting point of the mixture. The cooling process is preferably conducted in such a way that the composition of the invention is converted to fine particles in the course of cooling. If the carrier contained a certain amount of a solvent, the cooling is preferably executed in such a way that the solvent is removed at the same time.

9. Use of the solid pulverized compositions according to any of Claims 1 to 7 and of the process products according to Claim 8 in aqueous solution.

## Revendications

1. Compositions solides, sous forme de poudre, contenant au moins un support solide, soluble dans l'eau ainsi qu'au moins une substance tensioactive, **caractérisées en ce que** la substance tensioactive est un polyéthersiloxane et **en ce que** le support soluble dans l'eau est un matériau polymère choisi parmi les homopolymères, les homopolymères étant choisis parmi le polyéthylèneglycol.

2. Compositions solides, sous forme de poudre selon la revendication 1, **caractérisées en ce que** les matériaux supports polymères présentent un poids molaire dans la plage de 600-20.000 g/mole, de manière particulièrement préférée dans la plage de 1000-15.000 g/mole, en particulier de préférence dans la plage de 2000-10.000 g/mole.

3. Compositions solides, sous forme de poudre selon la revendication 1 à 2, **caractérisées en ce que** le support soluble dans l'eau est chargé de 1-75% en poids, de manière particulièrement préférée de 3-50% en poids, en particulier de préférence de 5-40% en poids, de substances tensioactives, par rapport à la composition totale.

4. Compositions solides, sous forme de poudre selon la revendication 1 à 3, **caractérisées en ce que** la substance tensioactive est un polyéthersiloxane modifié par poly(oxyde d'éthylène)-poly(oxyde de propylène).

5. Compositions solides, sous forme de poudre selon la revendication 1 à 4, **caractérisées en ce que** les substances tensioactives correspondent à des polyéthersiloxanes de formule générale (I) :
MₐD_{b}D'_{c} Formule (I)
dans laquelle
M = R¹₃SiO_{1/2},
D = R¹₂SiO_{2/2},
D' = R¹R²SiO_{2/2},
où
a vaut 2,
b est situé entre 0 et 0,1 et vaut de préférence 0,
c est situé entre 1,0 et 1,15, de préférence entre 1,0 et 1,10, en particulier de préférence entre 1,00 et 1,05,
R¹ représente, indépendamment, hydrocarbure comprenant 1 à 8 atomes de carbone, de préférence des radicaux méthyle, éthyle, propyle ou phényle, en particulier de préférence des radicaux méthyle,
R² représente, indépendamment, un radical polyéther de formule (II)
-R³O[CH₂CH₂O]ₘ[CH₂CH(CH₃)O]ₙR⁵ Formule (II)
dans laquelle
m = 3,4 à 11,0, de préférence 3,6 à 9,9, plus préférablement 4,5 à 8,5,
n = 2,5 à 8,0, de préférence 2,7 à 7,5, plus préférablement 3,0 à 6,0,
cependant sous réserve que
m/n = 0,44 à 3,08, de préférence 0,55 à 3,00, plus préférablement 0,8 à 2,9, encore plus préférablement supérieur à 1,2 jusqu'à 2,85, en particulier de préférence 1,9 à 2,8,
R³ représente, indépendamment, des radicaux hydrocarbonés divalents comprenant 2 à 8 atomes de carbone, de préférence un radical éthylène, propylène, 1-méthylpropylène, 1,1-diméthylpropylène, en particulier de préférence -CH₂CH₂CH₂-,
R⁵ représente, indépendamment, un radical hydrocarboné comprenant 1 à 16 atomes de carbone ou hydrogène, de préférence hydrogène ou méthyle, en particulier hydrogène.

6. Compositions solides, sous forme de poudre selon la revendication 1 à 4, **caractérisées en ce que** les substances tensioactives correspondent à des polyéthersiloxanes de formule générale (I) :
M_{d}DₑT_{f}Q_{g} Formule (IV)
dans laquelle
M = [R^{f}₃SiO_{1/2}]
D = [R^{f}₂SiO_{2/2}]
T = [R^{f}SiO_{3/2}]
Q = [SiO_{4/2}]
où
d = 2 à 22, de préférence 2 à 14, en particulier 2,
e = 1 à 500, de préférence 1 à 300, en particulier 1 à 250,
f = 0 à 16, de préférence 0 à 8, en particulier 0,
g = 0 à 10, de préférence 0 à 6, en particulier 0,
le radical R^{f} représentant un radical R⁶, R⁷ ou R⁸, sous réserve qu'au moins un radical R^{f} est un radical R⁷,
R⁶ représentant un radical alkyle comprenant 1 à 16, de préférence 1-4, atomes de carbone ou un radical aryle,
R⁷ représentant un radical polyéther de formule (V) - (Y)ₕ[O(C₂H₄₋ᵢR⁹O)ⱼ(CₓH₂ₓO)ₖZ¹]_{w} Formule (V)
où
h = 0 ou 1, de préférence 1,
i = 1 à 3, de préférence 1,
j ≥ 1 à 50, de préférence 2 à 40, plus préférablement 3 à 30, de manière particulièrement préférée 5 à 20,
x = 2 à 4,
k ≥ 0 jusqu'à 20, de préférence 0-15,
w = 1 à 4, de préférence 1,
la somme de j + k = 3 à 150, de préférence 3 à 10,
R⁹ = indépendamment, un radical hydrogène, un radical hydrocarboné aliphatique monovalent comprenant 1 à 18 atomes de carbone ou un radical hydrocarboné aromatique comprenant 6-18 atomes de carbone, qui peut le cas échéant également être un aromatique substitué dont les substituants sont choisis parmi les groupes radical hydrogène, radical alkyle comprenant 1 à 6 atomes de carbone, radical alcoxy et radical hydroxy,
Z¹ = indépendamment, un radical hydrogène ou un radical organique monovalent, de préférence hydrogène, méthyle, butyle ou -C(O)Me,
Y = un radical hydrocarboné (w+1)-valent comprenant 1 à 18 atomes de carbone, qui peut également être ramifié, de préférence -(CH₂)₃-,
R⁸ = un radical polyéther de formule (VI)
- (F)_{q}[O(C_{z}H_{2z}O)ᵣZ²]ᵤ Formule (VI)
dans laquelle
u = 1 à 4, de préférence 1,
q = 0 ou 1, de préférence 1,
z = 2 à 4, de préférence 2
r ≥ 3, de préférence 3-20, en particulier de préférence 3-16,
F = un radical hydrocarboné (u+1)-valent comprenant 1 à 18 atomes de carbone, qui peut également être ramifié, de préférence -(CH₂)₃-,
Z² = indépendamment, un radical hydrogène ou un radical organique monovalent, de préférence hydrogène, méthyle, butyle ou -C(O)Me,
cependant au moins 80% des radicaux R^{f} sont des radicaux méthyle.

7. Compositions solides, sous forme de poudre selon la revendication 1 à 6, **caractérisées en ce que** l'additif tensioactif est finement dispersé dans le support solide, soluble dans l'eau.

8. Procédé pour la préparation des compositions solides, sous forme de poudre selon la revendication 1 à 7, contenant au moins un support solide, soluble dans l'eau ainsi qu'au moins une substance tensioactive, **caractérisé en ce qu'**il présente les étapes a) à c) :
étape a) fusion du support solide soluble dans l'eau et régulation thermique à une température supérieure au point de fusion, de préférence de 2 à 100°C au-dessus du point de fusion, plus préférablement de 5 à 50°C, de manière particulièrement préférée de 10 à 30°C au-dessus du point de fusion, éventuellement, le support contient une certaine quantité d'un solvant, de préférence de l'eau ;
étape b) addition d'une substance tensioactive au support fondu de l'étape a) sous agitation, sans de préférence appliquer de forces de cisaillement importantes ;
étape c) refroidissement du mélange de l'étape b) sous le point de fusion, de préférence à une température de 10°C à 150°C, plus préférablement de 20°C à 100°C, de manière particulièrement préférée de 30°C à 50°C sous le point de fusion du mélange, de préférence, le procédé de refroidissement est réalisé de manière telle que la composition selon l'invention est transformée en fines particules lors de refroidissement, si le support contenait une certaine quantité d'un solvant, le refroidissement est de préférence réalisé de manière telle que le solvant est éliminé lors de celui-ci.

9. Utilisation des compositions solides sous forme de poudre selon l'une quelconque des revendications 1 à 7 et des produits de procédé selon la revendication 8 en solution aqueuse.
